# EUROPEAN PATENT SPECIFICATION

(11) **EP 2 076 424 B1**
(45) Date of publication and mention of the grant of the patent: **25.04.2012**
(21) Application number: 07826874.5
(22) Date of filing: 25.10.2007
(51) Int. Cl.: B62K 25/08, B62K 19/30

(54) **SUSPENSION FOR A VEHICLE**
FAHRZEUGAUFHÄNGUNG
SUSPENSION POUR VÉHICULE

(30) Priority: 31.01.2007 IT RM20070046
(43) Date of publication of application: 08.07.2009
(73) Proprietor: Hohenegger, Alexander, 00152 Roma (IT)
(72) Inventor: Hohenegger, Alexander, 00152 Roma (IT)
(74) Representative: Leone, Mario
(86) International application number: PCT/IB2007/054353
(87) International publication number: WO 2008/093177

(56) References cited:
- CH-A- 276 024
- FR-A- 681 527
- US-A1- 2005 023 794
- US-B1- 6 260 870

## Description

The present invention is related to a suspension, specifically to be used on the front steering wheel of a two- or three wheels vehicle with only one steering wheel, as a bicycle, a motorcycle, a motorbike, or possibly on a steering wheel of a vehicle like a car as well.

Generally, the suspension of a vehicle is the assembly of the members whereby the chassis is associated to the wheel.

The suspension is composed by link members controlling the chassis movement with respect to the wheel, by deformable elastic members absorbing the stresses on the wheel and by damping members cushioning and slowing down the oscillation.

The suspension according to the present invention finds a useful utilization in bicycles and motorbikes where the ratio between effectiveness and cheapness is a priority.

In the following, the term fork will be understood as the telescopic front suspensions.

Namely, the invention is referred to a conventional telescopic fork, with slider tubes sliding on fork tubes connected to the steering tube, limiting the drawbacks and enhancing lightness and simplicity.

The telescopic fork technology is consolidated. No mechanical solution is so common as the adoption of a telescopic fork in the motorcycles front suspensions. Now, in the transport technology is usual to identify in a vehicle the so called suspended bodies (the assembly of the chassis, the engine and part of the suspension rigidly connected thereto) and those non-suspended (wheels and part of the suspension rigidly connected thereto). Between wheels and chassis, intermediate means are interposed, i.e. the suspensions, whose task is essentially to insulate the chassis and the load from the vertical movements which the wheels have to carry out to follow the road path.

The optimal condition would mean the non-suspended bodies moving as quicker and faster as possible, copying the unevenness of the road and adapting to the different drive phases, while the suspended bodies should hypothetically remain impassive. Hence, it is apparent that the reduction of the non-suspended body weight would be beneficial to the working of the suspensions.

Although the non-conventional applications are not so rare, the compactness and the lightness of a traditional fork make it preferable in every field, from the racetrack models to the extreme off-road models.

Notwithstanding the constructional features thereof, a suspension is defined as telescopic when a longitudinal sliding occurs between the fixed part and the mobile part, one bound to the chassis suspended bodies, the other bound to those non-suspended of the wheel.

In a kinematical point of view, such a mechanism embodies a simple prismatic joint, i.e. a constraint having only one degree of freedom (translation). In the most common applications, the elastic members (helicoidal springs) and the damping members are coaxially arranged, drastically limiting the overall size of each fork arm.

Conventionally, the slider tube is defined as the outer member housing the sliding of the inner member, defined as fork tube; if the fork tube is part of the suspended bodies, i.e. linked to the steering tube, such a configuration is called with conventional fork tubes, while in the opposite case the fork is called with upside-down fork tubes. This latter solution, offering a greater strength section for the frame bonding composed by the steering plate, allows a very outstanding flexural and torsional rigidity under the same size and therefore it is preferred in the most specialised applications. In this point of view, a more precise information is necessary: each arm is always and solely subjected to flexion, such a flexion has the same direction if the whole fork is subjected to flexion; instead, the flexion has opposite directions if the fork is subject to torsion.

As a matter of fact, each arm, considered alone, does not offer any strength to the relative rotation between slider and fork tubes, practically protecting the fragile inner hydraulic components from the relevant outer stresses.

In some applications, a contribution to the assembly torsional strength is due by transverse link members between the two arms, in the following called bridge, capable to limit the free length and hence the flexibility thereof; this kind of arrangements are very helpful when an imbalance of the braking force on the wheel occurs, as in the case with only one brake disc. In this connection, it is apparent how even a suitable rigidity of the wheel pivot helps to limit the torsion load on the fork. In terms of directional inertia, the telescopic fork is superior with respect to any other front suspension system: the polar torque with respect to the steering axis is remarkably limited due to the reduced length between the axis and the suspended bodies (the latter in turn having a minimal entity e.g. with respect to an Earles fork).

A spring subject to a load is deformed and therefore it is able to give back a force equal to that loaded thereto. The entity of the deformation is proportional to the spring constant, depending upon the material and the geometry; such a proportionality is defined by a factor called elastic constant. A spring can work in compression and in traction.

Again, while it is possible to achieve a desired progressivity in the elastic operation with leverage schemes, this effect is not possible with a telescopic fork: the only solution is the adoption of a variable pitch springs or of more springs having different elastic constants. It is understood that only one spring is more checkable. A further contribution to the achieving of a progressive response curve of the suspension is due to the introduction of a volume of gas inside the slider tubes (air, in the simplest configuration), whose presence in fact achieves a pneumatic spring in parallel with the mechanical spring.

The response of the pneumatic spring is proportional to the air pressure, i.e. proportional to the lowing of the suspension, and allows to suitably modulate the response of a constant pitch helicoidal spring.

More precisely, the proportionality is not linear, hence the achievable progressivity is always greater than that of one or more possible mechanical springs arranged in a row or in parallel.

In the assembly or in the calibration, the variation of the air volume inside the slider at rest allows to opportunely set the global elastic response of the suspension; in the more advanced applications even more developed systems are used; with cartridges filled with gas whose pressure can be appropriately varied according to suitable indexes. In terms of quality, the high performance telescopic forks always have the adjustment of the so called spring preload; the latter is equipped with an adjustment screw so as to increase or to decrease the compression at rest thereof; in this connection is important to underline how such operation in any case does not increase the stiffness of the suspension, the latter depending only upon the spring elastic constant (K) which is exclusively function of the structure thereof. In any case, only the free length of the suspension is adapted to the different load conditions (driver weight, a possible passenger or luggage).

A sole exception is foreseen when variable pitch springs are placed inside the slider tubes; in such a case the compression of a certain number of coils really changes the residual elastic constant of the spring, hence the response thereof is dynamic.

In connection with the hydraulic section, in the most elementary systems a spindle coaxial to the spring is present, linked to a pumping member provided with a series of passages for the working fluid, usually in the shape of nozzles. In the travel of the suspension, the fluid shifts from a volume to the other through the forced passages generating a resistance more or less proportional to the flowing speed, the proportionality constant firstly depending upon the fluid features in terms of viscosity: the only way to vary the response of a simplified fork is in fact the replacement of the oil with another having a different viscosity degree.

In technically more sophisticated models, the possibility of adjusting, within certain limits, the resistance offered by the forced passages is given, both in the lowering motion (compression) and in the return motion (extension), the specialised applications allowing then to even intervene on the adjustment both at high and low flowing speeds, just to substantially separate the behaviour of the motorbike on the unevenness and in the pitching due to a strong brake action.

Again, the last damping members are completely housed by so called cartridges, thereby completely separating the mechanic and elastic part from the absolutely most fragile hydraulic part; the working fluid of the damper does not risk to be contaminated by external agents and assures a timely constant operation. Although unchanged in the set up thereof, in the last years the telescopic fork underwent a huge evolution in the internal components thereof.

**Patent documents** CH 276024 A**,** FR 681527 A**,** US 2005/023794 A1 **and** US 6260870 B1 **disclose suspensions of motorcycles with a central spring arranged at a central rod or tube connecting lower and upper bridges.**

The technical problem underlying the present invention is to provide a suspension that, in the light of the considerations above offered, allows to obviate to the drawbacks of an excessive structural complexity of the known suspensions, even assuring high performances.

Such a problem is solved by a suspension as **defined in appended claim 1**.

The fork according to the present invention is especially useful in the reduction of the non-suspended body weights and in the increase of the resistance against the flexion without using special materials, and above all allowing to decrease the costs thank to the lower number of components and machining operations.

The present invention will be hereinafter disclosed according to two preferred embodiments thereof, provided with an exemplificative and non limitative purpose with reference to the annexed drawings wherein:
* Figure 1 shows a schematic perspective view of a suspension according to a first embodiment of the invention, mounted on a front wheel of a motorcycle;
* Figure 2A shows a front elevational view of the suspension of Figure 1, sectioned according to a vertical plane;
* Figure 2B shows a side elevational view of the suspension of Figure 1, sectioned according to a vertical plane
* Figure 3 illustrates the mounting of a suspension according to the invention on a frontally seen motorbike;
* Figure 4 shows a schematic perspective view of a suspension according to a second embodiment of the invention, mounted on a front wheel of a motorcycle;
* Figure 5 shows a front elevational view of the suspension of figure 4, sectioned according to a vertical plane; and
* Figure 6 shows a cross-section of a detail of the suspension of Figure 4.

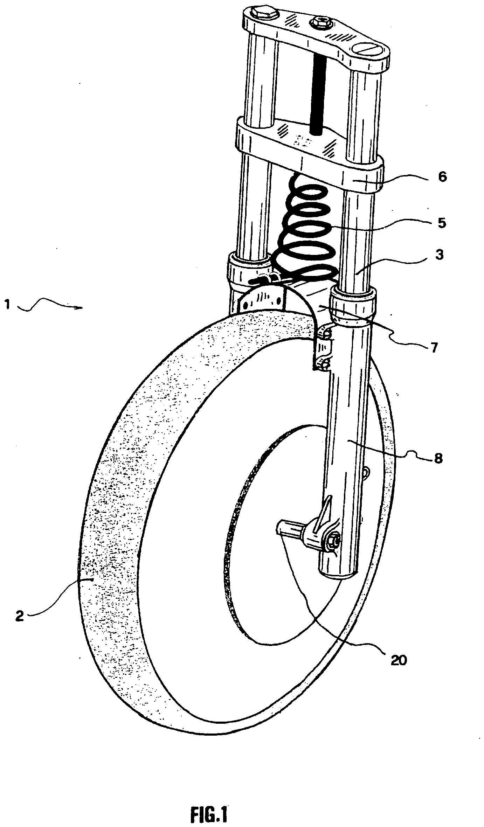

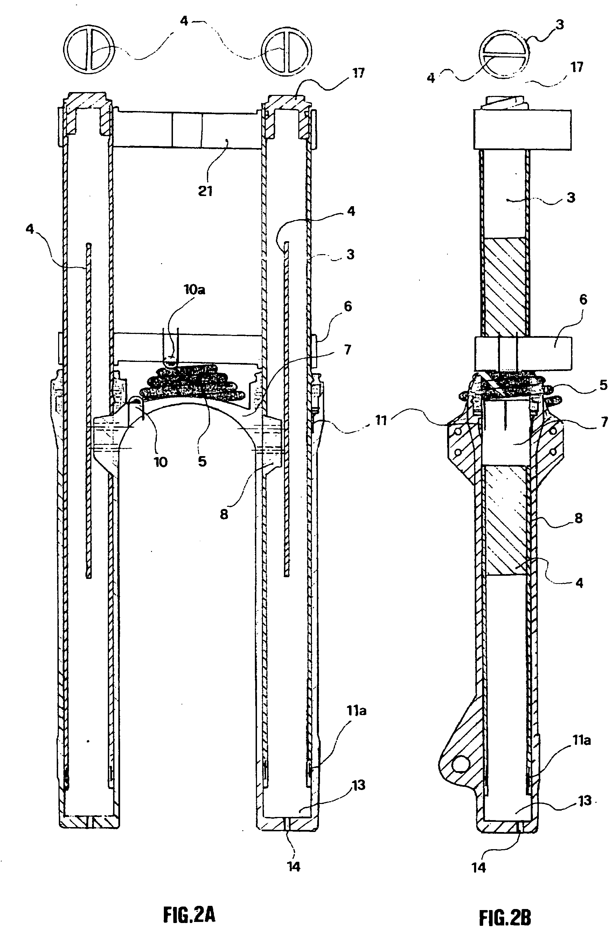

With reference to Figure 1 to 5, a suspension is globally indicated as 1. It is a fork-type suspension and it is mounted on a front steering wheel 2 of a two-wheels vehicle, e.g. a motorcycle.

The suspension 1 comprises a pair of slider tubes 8 linked to the hub 20 of the wheel 2, in which fork tubes 3 are fitted.

In this embodiment, the coupling slider tube 8 and fork tube 3 embodies the damping member of the suspension 1, thanks to a hydraulics which will be hereinafter described in greater detail.

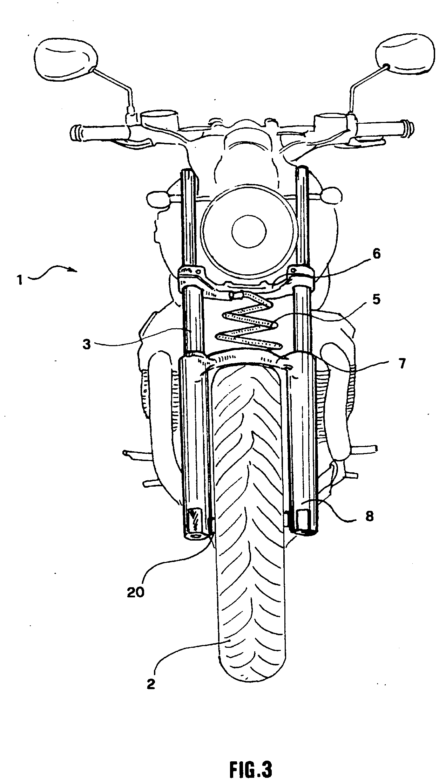

The slider tubes 8 are rigidly linked by a first linking bridge 7, substantially above the tyre (Figure 3). Above, the fork tubes 3 are rigidly linked by a second linking bridge 6. A third linking bridge 21 links the fork tubes 3 substantially near the steering tube or the steering wheel.

Between the first and the second linking bridges 7, 6, a deformable elastic member 5 is fitted, in the present embodiment in the shape of a spring having a longitudinal axis substantially parallel to the steering axis, and centred with respect to the fork tubes 3, i.e. substantially coplanar to the middle plane of the wheel. In this embodiment, it substantially coincides with the transverse plane of the damping members and anyway defines a direction **along which** the elastic member 5 is deformed.

With reference to the hydraulics of the suspension 1, the fork tube has a substantially hollow tubular structure.

The fluid inside the damping member, generally a kind of oil, operates in better conditions, in consideration of the absence of the spring inside the fork tube 3. Particularly, a mechanical work of the springs inside the slider tube 8 is not foreseen, which may create an oil emulsion.

The fork tube 3 houses a cross wall 4, immersed into the fluid and placed so as to stiffen the fork tube 3. The shape of the cross wall 4, particularly the section thereof, can be selected so as to achieve the desired strength for the damping member.

It centrally extends inside the fork tube 3, and it is laterally connected to the inner tubular surface thereof.

In particular, the cross wall 4 is arranged so as to assure a greater stiffness in connection with deformations according to a plane parallel to that of the wheel 2.

The cross wall 4 can be joined to the inner walls of the fork tube 3 by mechanical interference, applying and adequate fitting force. In such a way, a removable cross wall is provided, e.g. replaceable with a more or less stiff cross wall.

Otherwise, the cross wall 4 can be fixed inside the fork tube 3 by brazing of the side edges thereof. Such connection, even being irreversible, has the advantage of not requiring an excessive control of the cross section measure in the manufacturing process.

According to an alternative solution, cross wall and fork tube can be manufactured in one piece, e.g. by extrusion, to optimize a mass manufacturing.

The lower fork tube diameter, at the same geometry, assures a greater steering angle, more appreciable if compared with an upside-down type fork.

This suspension can further be equipped with an external tank for providing a pressurised gas supporting action.

The spring 5 extends from the first linking bridge 7, making integral the two slider tubes 8 to each other and housing a lower recess 10 of the spring 5. The second linking bridge 6, i.e. a lower steering plate opposed to the upper plate which is the third bridge 21, houses the upper recess 10a of the spring. The ends of the spring are constrained within said recesses.

The bound section of the spring 5 is not free to rotate, with the possible interposition of bushings. The recesses have a retainer for preventing the spring 5 to rotate.

It is understood that the spring 5, for achieving different elasticity, can be easily replaced thanks to its external arrangement. Therefore, the suspension 1 can be provided with a set of springs 5 having different elastic constants, for adapting the suspension to different uses (on road, off road etc.).

The spring 5 can have different shapes, in the present preferred embodiment the spring is helicoidal with a conical shape, with the advantage of taking up less space when the suspension is compressed at the end-of-travel position thereof, of lying as close as possible at the attachments thereof, i.e. the constraints 10, 10a, and of behaving like a variable pitch spring as well, having the more flexible segment integral to the non-suspended body.

The inner machining for housing plugs and for pumping members of the damping member may remain the same.

The higher stiffness of such a geometry allows a reduction of the wall thickness of the fork tubes 3.

The fork tubes 3 further comprise sliding bushings DU upper 11 and lower 11a, guiding the sliding of the fork tubes 3 inside the slider tubes 8.

The suspension according to the present invention is apt to be manufactured in a simple manner and to be advantageously mass-produced at limited costs,

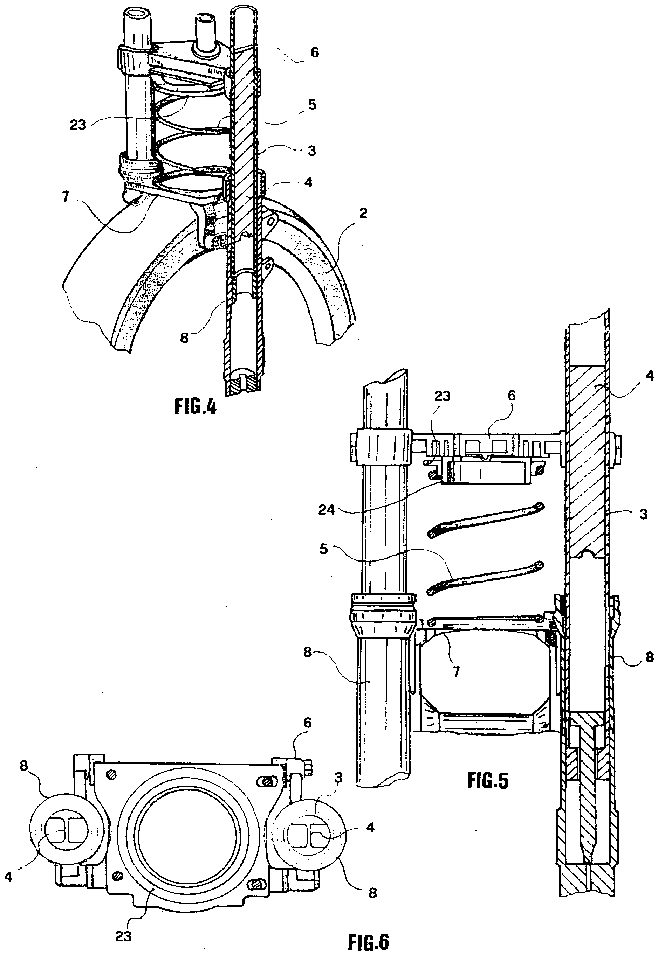

With reference to figure 4 to 6, a second embodiment of the suspension is shown, and the same reference numerals are used for indicating analogous components. In this example, the spring 5 is a variable pitch cylindrical helicoidal spring, to have a progressivity in the elastic constant thereof: softer at the beginning of the compression, stiffer at the end of the travel.

The coil resting on the lower first linking bridge 7 is fitted into a groove formed on the upper face of the bridge 7, which is shaped substantially as a plate, perpendicularly arranged to the axis of the spring 5.

Instead, the upper coil is substantially received inside a threaded ferrule 23 inserted inside a bell 24 connected to the upper bridge 6, in turn provided with a counter-threading, to let the ferrule 23 be translated according the axis of the spring 5, so as to adjust the position of the coil of the spring 5 and the preload thereof, which will be in any case greater than zero.

In this version and in the preceding one as well, means for preventing the elastic expulsion of the spring 5 from the seat thereof can be provided, for elementary safety reasons. For instance, in this case, a safety cable can be provided, connected to the bell 25 and to the plate of the lower bridge 7, extending inside the spring 5.

It is understood that the plate of the lower bridge 7 and the support of the bell 24 can be translated forward and rearward or even sideward, just for achieving the most advantageous arrangement of the spring, anyway remaining free, without damping members inside.

In the above described embodiments, thanks to the introduction of the cross wall 4 inside the fork tubes 3, the stiffness of the fork tube can be varied, to easily checkout the best cycling balance of the motorbike.

The opportunity to intervene only on the dimensions of the cross wall makes after all easier to optimize the intermediate stiffness's.

In this way, the double advantage of a better driving and the production optimization is achieved.

Beside the increase of the stiffness along a longitudinal direction, it is possible to achieve a certain transversal flexibility for a more precise cycling set up.

Moreover, a greater slidability is achieved, thanks to the lower diameter of the bushings DU, and to a better alignment at the braking, assured by the greater stiffness of the fork tube.

For the best set up, it is further possible for the user to have springs with different K's, considering that the preload does not affect the stiffness.

The easy replaceability of the spring is achieved by a simple specific tool. Above all without touching the oil of the elastic members. This arrangement prevents the oil volume to vary inside the damping member, variation which may affect the damping and elastic behavior of such a component.

The arrangement of the hydraulic section offers some advantages: lesser oil emulsion for the absence of the spring inside the fork tubes and eased manufacturability even in a configuration using gases.

To the above described suspension a man skilled in the art, to meet further and contingent needs, can introduce several additional modifications and variations, in any case all falling within the protection scope of the present invention, as defined by the appended claims.

## Claims

1. A suspension (1), for a front steering wheel (2) of two- or three-wheels vehicles with only one steering wheel or for a steering wheel of a vehicle like a car, comprising a deformable elastic member (5), to absorb the stresses on the steering wheel (2), and damping members (3, 8), for cushioning and slowing down the oscillation, the damping members consisting of two slider tubes (8) in which respective fork tubes (3) are inserted, the slider tubes (8) and the fork tubes (3) being adapted to be substantially symmetrically arranged at the sides of the steering wheel (2), the slider tubes (8) are arranged to be linked to a hub (20) of the steering wheel (2), the fork tubes (3) are arranged to be connected to a steering tube, the slider tubes (8) are rigidly linked by a first linking bridge which, in use, is adapted to be positioned above the steering wheel (2), the fork tubes (3) are rigidly linked by a second linking bridge (6) which is above the first linking bridge (7) and by a third linking bridge (21) which is above the second linking bridge (6),
the deformable elastic member (5) is in the form of a helicoidal spring having a longitudinal axis substantially parallel to the steering axis and substantially centred with respect to the fork tubes axes, defining a direction along which the elastic member (5) is deformed,
**characterized in that** the helicoidal spring is fitted between the first and second linking bridges (6, 7) with respective elastic member ends connected to the first and second linking bridges (6, 7).

2. Suspension (1) according to claim 1, wherein the helicoidal spring axis substantially coincides with the steering axis.

3. Suspension (1) according to claim 1 or 2, wherein each fork tube (3), having a hollow tubular shape, has inside a cross wall (4) to operate as pumping member.

4. Suspension (1) according to claim 3, wherein each cross wall (4) is arranged to stiffen the respective damping member, centrally extending in the respective fork tube (3) and being laterally linked at an inner tubular surface thereof.

5. Suspension (1) according to claim 4, wherein the cross walls (4) are respectively arranged so as to assure a greater stiffness with respect to deformations on a plane parallel to that of the steering wheel (2).

6. Suspension (1) according to any one of the preceding claims, wherein the helicoidal spring (5) extends from a lower constraint (10) to an upper constraint (10a), the constrained section of the helicodal spring (5) being rectilinear and free to rotate, said constraints (10, 10a) being located at the first and second linking bridges (6, 7) respectively, and having a stop for preventing the helicoidal spring (5) to rotate.

7. Suspension (1) according to claim 6, wherein the helicoidal spring (5) is arranged so as to achieve the end-of-travel in extension of the slider tubes (8) with respect to the fork tubes (3).

8. Suspension (1) according to any one of preceding claims 1 to 5, wherein an end coil of the helicoidal spring is fixed to a ferrule which can translate along the axis of the spring (5) to adjust the preload.

9. Suspension (1) according to claim 1, provided with a set of helicoidal springs (5) with different elastic constants, for adapting the suspension to different uses.

10. Suspension (1) according to claim 1, wherein the helicoidal spring (5) is of the kind with a conical shape.

11. Suspension (1) according to claim 1, wherein the helicoidal spring (5) is of the kind with a cylindrical shape.

12. Suspension (1) according to any one of the preceding claims, wherein the fork tubes (3) comprise upper (11) and lower (11a) sliding bushings, arranged so as to guide the sliding of the fork tubes (3) inside the slider tubes (8).

## Patentansprüche

1. Aufhängung (1) für ein lenkbares Vorderrad (2) für zwei- oder dreirädrige Fahrzeuge mit nur einem lenkbaren Rad oder für ein lenkbares Rad eines Fahrzeugs wie eines Automobils, umfassend ein verformbares elastisches Element (5), um die Belastungen auf das lenkbare Rad (2) zu absorbieren, und Dämpfungselemente (3, 8) zum Abfangen und Verlangsamen der Schwingung, wobei die Dämpfungselemente aus zwei Gleitrohren (8) gebildet sind, in die zugehörige Gabelrohre (3) eingesetzt sind, wobei die Gleitrohre (8) und die Gabelrohre (3) dazu ausgebildet sind, dass sie im Wesentlichen symmetrisch an den Seiten des lenkbaren Rads (2) angeordnet sind, wobei die Gleitrohre (8) so angeordnet sind, dass sie mit einer Nabe (20) des lenkbaren Rads (2) gekoppelt sind, die Gabelrohre (3) so angeordnet sind, dass sie mit einem Lenkrohr verbunden sind, die Gleitrohre (8) mit einer ersten Verbindungsbrücke starr gekoppelt sind, die im Einsatz dazu ausgebildet ist, dass sie über dem lenkbaren Rad (2) positioniert ist, die Gabelrohre (3) mit einer zweiten Verbindungsbrücke (6), die über der ersten Verbindungsbrücke (7) angeordnet ist, und einer dritten Verbindungsbrücke (21), die über der zweiten Verbindungsbrücke (6) angeordnet ist, starr gekoppelt sind,
das verformbare elastische Element (5) in Form einer Schraubenfeder ausgebildet ist, die eine Längsachse aufweist, die im Wesentlichen parallel zur Lenkachse und im Wesentlichen zentriert zu den Gabelrohrachsen angeordnet ist, so dass eine Richtung definiert ist, entlang der das elastische Element (5) verformt wird,
**dadurch gekennzeichnet, dass** die Schraubenfeder zwischen die erste und die zweite Verbindungsbrücke (6, 7) eingesetzt ist, wobei zugehörige Enden des elastischen Elements mit der ersten und der zweiten Verbindungsbrücke (6, 7) verbunden sind.

2. Aufhängung (1) nach Anspruch 1, wobei die Schraubenfederachse im Wesentlichen mit der Lenkachse zusammenfällt.

3. Aufhängung (1) nach Anspruch 1 oder 2, wobei jedes Gabelrohr (3), das die Form eines Hohlrohrs aufweist, innen eine Querwand (4) aufweist, so dass sie als Pumpelement wirkt.

4. Aufhängung (1) nach Anspruch 3, wobei jede Querwand (4) so angeordnet ist, dass sie das zugehörige Dämpfungselement versteift, wobei sie sich mittig im zugehörigen Gabelrohr (3) erstreckt und seitlich mit einer Innenrohrfläche des Rohrs gekoppelt ist.

5. Aufhängung (1) nach Anspruch 4, wobei die Querwände (4) jeweils so angeordnet sind, dass sie eine größere Steifigkeit bezüglich Verformungen an einer Ebene parallel zur Ebene des lenkbaren Rads (2) gewährleistet.

6. Aufhängung (1) nach einem der vorhergehenden Ansprüche, wobei die Schraubenfeder (5) sich von einer unteren Begrenzung (10) zu einer oberen Begrenzung (10a) erstreckt, wobei der Begrenzungsabschnitt der Schraubenfeder (5) geradlinig und frei drehbar ist, wobei die Begrenzungen (10, 10a) an der ersten bzw. der zweiten Verbindungsbrücke (6, 7) gelegen sind und eine Arretierung aufweisen, um zu verhindern, dass die Schraubenfeder (5) sich dreht.

7. Aufhängung (1) nach Anspruch 6, wobei die Schraubenfeder (5) so angeordnet ist, dass sie den Maximalweg in der Ausdehnung der Gleitrohre (8) zu den Gabelrohren (3) erreicht.

8. Aufhängung (1) nach einem der Ansprüche 1 bis 5, wobei eine Endwindung der Schraubenfeder an einem Ring befestigt ist, der sich entlang der Achse der Feder (5) verschieben kann, um die Vorspannung einzustellen.

9. Aufhängung (1) nach Anspruch 1, versehen mit einem Satz Schraubenfedern (5) mit unterschiedlichen Elastizitätskonstanten, um die Aufhängung an unterschiedliche Anwendungen anzupassen.

10. Aufhängung (1) nach Anspruch 1, wobei die Schraubenfeder (5) in einer konischen Form ausgebildet ist.

11. Aufhängung (1) nach Anspruch 1, wobei die Schraubenfeder (5) in einer zylindrischen Form ausgebildet ist.

12. Aufhängung (1) nach einem der vorhergehenden Ansprüche, wobei die Gabelrohre (3) obere (11) und untere (11a) Gleitbuchsen umfassen, die so angeordnet sind, dass sie das Gleiten der Gabelrohre (3) in den Gleitrohren (8) führen.

## Revendications

1. Suspension (1), pour une roue de direction avant (2) des véhicules à deux ou trois roues avec une seule roue de direction ou pour une roue de direction d'un véhicule de type voiture, comprenant un élément élastique déformable (5) pour absorber les tensions sur la roue de direction (2), et des éléments d'amortissement (3, 8) pour amortir et ralentir l'oscillation, les éléments d'amortissement se composant de deux tubes coulissants (8) dans lesquels des tubes de fourche (3) sont insérés, les tubes coulissants (8) et les tubes de fourche (3) étant adaptés pour être agencés de manière sensiblement symétrique sur les côtés de la roue de direction (2), les tubes coulissants (8) sont agencés pour être reliés à un moyeu (20) de la roue de direction (2), les tubes de fourche (3) sont agencés pour être raccordés à un tube de direction, les tubes coulissants (8) sont reliés rigidement par un premier pont de liaison qui, à l'usage, est adapté pour être positionné au-dessus de la roue de direction (2), les tubes de fourche (3) sont rigidement reliés par un deuxième pont de liaison (6) qui est au-dessus du premier pont de liaison (7) et par un troisième pont de liaison (21) qui est au-dessus du deuxième pont de liaison (6),
l'élément élastique déformable (5) se présente sous la forme d'un ressort hélicoïdal ayant un axe longitudinal sensiblement parallèle à l'axe de direction et sensiblement centré par rapport aux axes des tubes de fourche, définissant une direction le long de laquelle l'élément élastique (5) est déformé,
**caractérisée en ce que** le ressort hélicoïdal est monté entre les premier et deuxième ponts de liaison (6, 7) avec les extrémités respectives de l'élément élastique raccordées aux premier et deuxième ponts de liaison (6, 7).

2. Suspension (1) selon la revendication 1, dans laquelle l'axe du ressort hélicoïdal coïncide sensiblement avec l'axe de direction.

3. Suspension (1) selon la revendication 1 ou 2, dans laquelle chaque tube de fourche (3), ayant une forme tubulaire creuse, a à l'intérieur, une paroi transversale (4) prévue pour fonctionner comme un élément de pompage.

4. Suspension (1) selon la revendication 3, dans laquelle chaque paroi transversale (4) est agencée pour renforcer l'élément d'amortissement respectif, s'étendant centralement dans le tube de fourche (3) respectif et étant latéralement relié au niveau de sa surface tubulaire interne.

5. Suspension (1) selon la revendication 4, dans laquelle les parois transversales (4) sont respectivement agencées pour garantir une meilleure rigidité par rapport aux déformations sur un plan parallèle à celui de la roue de direction (2).

6. Suspension (1) selon l'une quelconque des revendications précédentes, dans laquelle le ressort hélicoïdal (5) s'étend à partir d'une contrainte inférieure (10) jusqu'à une contrainte supérieure (10a), la section contrainte du ressort hélicoïdal (5) étant rectiligne et libre de tourner, lesdites contraintes (10, 10a) étant positionnées au niveau des premier et deuxième ponts de liaison (6, 7) respectivement et ayant une butée pour empêcher la rotation du ressort hélicoïdal (5).

7. Suspension (1) selon la revendication 6, dans laquelle le ressort hélicoïdal (5) est agencé afin d'obtenir la fin de course en extension des tubes coulissants (8) par rapport aux tubes de fourche (3).

8. Suspension (1) selon l'une quelconque des revendications 1 à 5 précédentes, dans laquelle une spire d'extrémité du ressort hélicoïdal est fixée à une virole qui peut effectuer un mouvement de translation le long de l'axe du ressort (5) afin d'ajuster la précharge.

9. Suspension (1) selon la revendication 1, prévue avec un ensemble de ressorts hélicoïdaux (5) avec des constantes élastiques différentes, pour adapter la suspension à différentes utilisations.

10. Suspension (1) selon la revendication 1, dans laquelle le ressort hélicoïdal (5) est du type à forme conique.

11. Suspension (1) selon la revendication 1, dans laquelle le ressort hélicoïdal (5) est du type à forme cylindrique.

12. Suspension (1) selon l'une quelconque des revendications précédentes, dans laquelle les tubes de fourche (3) comprennent des coussinets coulissants supérieur (11) et inférieur (11a), agencés afin de guider le coulissement des tubes de fourche (3) à l'intérieur des tubes coulissants (8).
